# EUROPÄISCHE PATENTANMELDUNG

(11) **EP 1 895 106 A1**
(43) Veröffentlichungstag der Anmeldung: **05.03.2008**
(21) Anmeldenummer: 06405370.5
(22) Anmeldetag: 28.08.2006
(51) Int. Cl.: F01D 11/00, F01D 17/16, F02C 6/12

(54) **Abdichtung verstellbarer Leitschaufeln**

(71) Anmelder: ABB Turbo Systems AG, 5400 Baden (CH)
(72) Erfinder: Schlienger, Joel, 8008 Zürich (CH); Kopp, Adrian, 5416 Kirchdorf (CH)
(74) Vertreter: ABB Patent Attorneys

(57) **Zusammenfassung**

Die Leitvorrichtung einer Turbine weist im Turbinengehäuse (22, 23) drehbar gelagerte Leitschaufel (31) auf. Zwischen dem Turbinengehäuse (22) und dem Leitschaufelschaft (32) ist eine Dichtblende (80) angeordnet. Die zusätzliche axiale Druckfeder (90) sorgt dafür, dass die Dichtblende (80) kontinuierlich an die Leitschaufel-Gegenkontur (34) gepresst wird und dadurch den axialen Spalt sowie die Leckage-Strömung unterbunden werden.

## Beschreibung

### Technisches Gebiet

Die Erfindung bezieht sich auf das Gebiet der Strömungsmaschinen. Sie betrifft die Leitvorrichtung einer Strömungsmaschine, beispielsweise der Turbine eines Abgasturboladers, mit rotierbar gelagerten, verstellbaren Leitschaufeln sowie ein Abgasturbolader mit einer Turbine mit einer solchen Leitvorrichtung.

### Stand der Technik

Abgasturbinen, beispielsweise von Turboladern, werden in Verbindung mit einem Verbrennungsmotor eingesetzt. Das Abgas aus dem Verbrennungsmotor wird dabei als Antriebsmittel zum Antreiben des Turbinenrades benutzt. Das Turbinenrad ist durch eine Welle mit dem Verdichterrad verbunden, mit welchem die dem Verbrennungsmotor zuzuführende Ansaugluft komprimiert wird. Um den variablen Betriebsbedingungen moderner Motoren gerecht zu werden, können im Abgasturbinen anstelle von festen Strömungsgittern (Düsenring) verstellbare Turbinengeometrien (VTG) eingesetzt werden. Dabei lassen sich durch einen Verstellmechanismus die Anstellwinkel von Turbinenleitschaufeln dem jeweiligen Betriebspunkt anpassen.

Eine VTG Vorrichtung umfasst in der Regel mehrere in einem Lagergehäuse gelagerte Leitschaufeln und einen Verstellmechanismus zum Drehen der Leitschaufeln. VTG Vorrichtungen sind etwa in EP 0 226 444 oder DE 43 09 636 beschrieben.

Die Leitschaufeln einer Abgasturbine, welche im Betrieb sehr stark erhitzt werden, müssen mit angemessenem, radialem Spiel in den Lagerbüchsen eingebaut sein, damit sie im heissen Betriebszustand nicht in den Lagerbüchsen verklemmen. Aufgrund des radialen Spiels zwischen den Lagerbüchsen und dem Leitschaufelschaft entweicht aus dem Bereich rund um die Leitschaufel stets eine geringe Menge heisser Gase in die Umgebung. Mit zunehmendem Lagerspiel nimmt diese Leckage-Strömung durch die Lagerbüchse zu. Dieser Effekt führt zu einem Verlust an Turbinenwirkungsgrad sowie einer verstärkten Geräuschentwicklung, in der Regel in Form eines immer stärker werdenden Pfeifens.

### Kurze Darstellung der Erfindung

Die Aufgabe der Erfindung besteht folglich darin, eine Verstellvorrichtung für eine Leitvorrichtung einer Strömungsmaschine dahingehend zu verbessern, dass trotz dem betriebsbedingten Spiel zwischen den beweglichen Teilen der Leitvorrichtung keine oder nur eine geringe Leckage-Strömung durch die Lager der Leitschaufeln entweicht.

Erfindungsgemäss wird dies verwirklicht, indem zwischen dem Gehäuse, in welchem die Leitschaufeln drehbar gelagert sind, und den jeweiligen Leitschaufeln eine Dichtblende angeordnet wird.

Die Dichtblende wird dabei vorteilhafterweise axial durch den zylindrischen Aussen- oder Innendurchmesser der für die Lagerung des Leitschaufelschafts eingesetzten Führungsbüchse geführt. Ein allenfalls verbleibender radialer Restspalt zwischen der Dichtblende und der Führungsbüchse ist auf ein minimales Spiel toleriert, so dass nur ein geringer Restmassenstrom durch die Passung entweicht.

Eine zusätzliche axiale Druckfeder sorgt erfindungsgemäss dafür, dass die Dichtblende kontinuierlich an die Leitschaufel-Gegenkontur gepresst wird und dadurch der axiale Spalt sowie die Leckage-Strömung unterbunden werden.

### Kurze Beschreibung der Zeichnungen

Nachfolgend wird anhand von Figuren die Erfindung genauer erläutert. Hierbei zeigt:
- Fig. 1: einen Schnitt durch einen turbinenseitigen Teil eines Abgasturboladers mit einer Leitvorrichtung mit verstellbaren Leitschaufeln.
- Fig. 2: einen Schnitt durch einen Teil der Leitvorrichtung nach Fig. 1 mit einer nicht abgedichteten Leitschaufel, und
- Fig. 3: eine Schnitt durch die Anordnung nach Fig.2 mit einer erfindungsgemäss abgedichteten Leitschaufel.

### Weg zur Ausführung der Erfindung

Die erfindungsgemässe Abdichtung verstellbarer Leitschaufeln kann auf alle Strömungsmaschinen mit Leitvorrichtungen, etwa Abgasturbolader, Nutzturbinen, Gasturbinen oder Verdichter, mit verstellbaren Leitschaufeln angewandt werden.

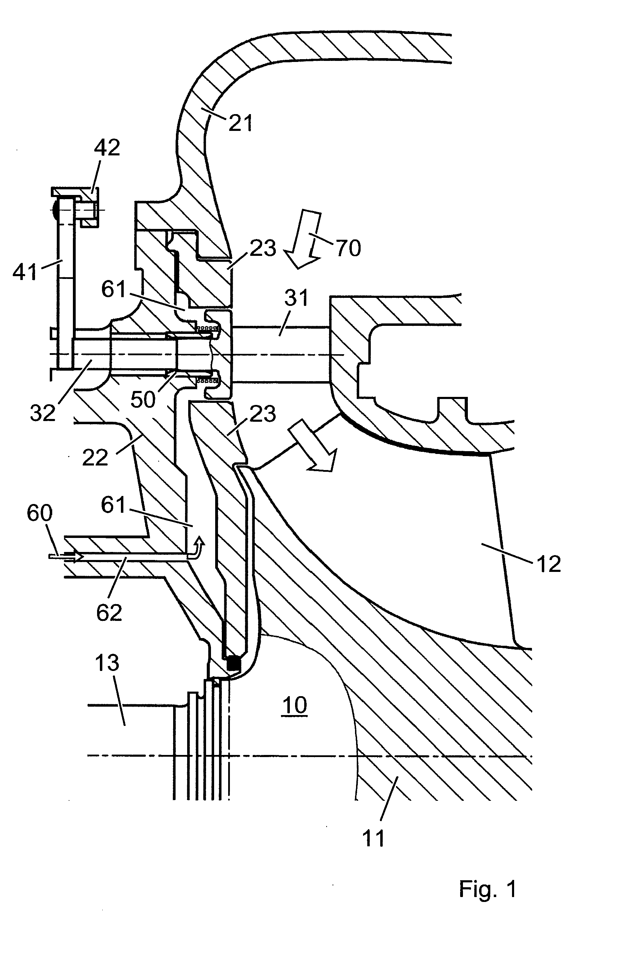

Fig. 1 zeigt die Turbinenseite eines Abgasturboladers mit einem in einem Turbinengehäuse angeordneten Turbinenrad 10. Das Turbinenrad umfasst eine Nabe 11 und darauf befestigte oder integral mit der Nabe gefertigte Laufschaufeln 12. Das Turbinengehäuse umfasst eine Gaseintrittsgehäuse 21, ein Lagergehäuse 22 sowie eine Zwischenwand 23 im Rücken der Nabe des Turbinenrades. Die Zwischenwand dient der thermischen Abschirmung des Lagergehäuses von dem heissen Turbinenrad. Sie kann alternativ auch durch Teile des Lagergehäuses oder des Gaseintrittsgehäuses gebildet sein.

Im Strömungskanal, welcher zu den Laufschaufeln hinführt, ist eine Leitvorrichtung angeordnet. Die Leitvorrichtung umfasst verstellbare Leitschaufeln 31 zum Regulieren der Abgasströmung 70. Die Leitschaufeln sind mit einem Leitschaufelschaft 32 im Turbinengehäuse rotierbar gelagert. Die Leitschaufeln 31 können über einen Verstellhebel 41 um die Achse des Leitschaufelschafts 32 gedreht werden. Der Verstellhebel wird über einen Verstellring 42 angetrieben, um die Leitschaufeln 31 in einem bestimmten Stellwinkel zu positionieren.

Der Leitschaufelschaft 32 ist mit geringem Spiel in dem Turbinengehäuse gelagert. Vorteilhafterweise umfasst das Turbinengehäuse im Bereich der Lagerung des Leitschaufelschafts Führungsbüchsen 50, welche eine hohe Abriebfestigkeit und eine gute Gleitfähigkeit aufweisen. Die Führungsbüchsen sind in das Turbinengehäuse eingepresst und feststehend.

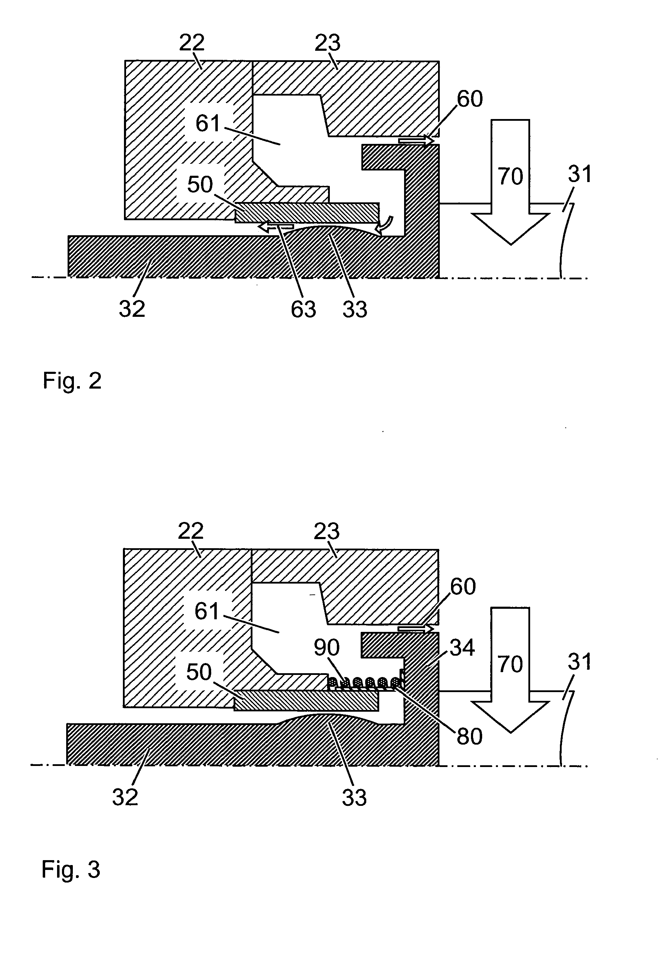

Wie aus Fig. 2 und Fig. 3 ersichtlich ist, weist der Leitschaufelschaft eine Lagerstelle 33 auf, welche im Innern der Führungsbüchse 50 gleitend gelagert ist. Zusätzlich kann der Leitschaufelschaft eine weitere Lagerstelle aufweisen, vorzugsweise am der Leitschaufel entgegengesetzten Ende. Die axiale Lagerung der Leitschaufeln erfolg in der Regel über einen oder zwei Axialanschläge bzw. über das Ende des Leitschaufelschafts auf der einen und das Leitschaufelprofil auf der anderen Seite. Die axiale Sicherung der Leitschaufel kann mittels Druckfeder gewährleistet werden.

Die Leitschaufeln, welche im Betrieb sehr stark erhitzt werden, müssen mit angemessenem, radialem Spiel in den Lagerbüchsen eingebaut sein, damit sie im heissen Betriebszustand nicht in den Lagerbüchsen verklemmen. Sowohl im Bereich der Lagerstellen 33 sowie radial ausserhalb der Gegenkontur 34 der Leitschaufeln ergeben sich dadurch kleine Spalte, durch welche Leckage-Ströme abfliessen können.

Um leckagebedingte Verluste des Turbinenwirkungsgrades möglichst vermeiden zu können, und um das Eindringen der heissen Abgase in die möglichst kühl zu haltenden Lagerstellen des Turboladers zu verhindern, kann in die Hohlräume 61 im Rücken der Zwischenwand Sperrluft eingebracht werden. Diese im Vergleich zu den Abgasen wesentlich kältere Druckluft kann extern zugeführt oder, wie in Fig. 1 dargestellt, am Verdichteraustritt abgezweigt und über einen Sperrluftkanal 62 zur Turbinenseite geführt werden. Die Sperrluft wird in die Hohlräume 61 geführt und verteilt sich entlang dem gesamten Umfang der Turbine. Die Sperrluft weist vorzugsweise einen zumindest geringfügig höheren Druck auf als die Abgasströmung 70.

Bei herkömmlichen Leitvorrichtungen gemäss Fig. 2 kann aufgrund des radialen Spiels zwischen der Führungsbüchse 50 und der Lagerstelle 33 des Leitschaufelschafts aus den Hohlräumen 61 heisses Gas, oder, falls vorhanden, Sperrluft in die Umgebung entweichen. Es entsteht eine Leckage-Strömung 63.

Erfindungsgemäss wird diese Leckage Strömung unterbunden, indem gemäss Fig. 3 eine Dichtblende 80 auf die Führungsbüchse 50 aufgeschoben wird. Die erfindungsgemässe Dichtblende ist vorteilhafterweise aus einem warmfesten Stahl gegossen oder gefräst. Je nach der axialen Länge des mit der Dichtblende zu überbrückenden axialen Spalts kann die Dichtblende axial länger und eher rohrförmig oder aber kürzer und eher ringförmig ausgebildet sein. Die Dichtblende weist einen Zylinderkragen, ein radial abstehender, umlaufender Kragen mit einem Axialanschlag, auf. Die Dichtblende 80 wird in der dargestellten Ausführungsform vom zylindrischen Aussendurchmesser der Führungsbüchse 50 getragen. Ein allfälliger radialer Spalt zwischen der Dichtblende 80 und der Führungsbüchse 50 ist auf ein minimales Spiel toleriert. Dieses radiale Spiel zwischen Teilen, welche sich im Betrieb nicht oder kaum relativ zueinander bewegenden, kann wesentlich kleiner gehalten werden, als das Spiel zwischen der Lagerstelle 33 des Leitschaufelschafts und der Führungsbüchse. Somit entweicht, falls überhaupt, nur ein geringer Restmassenstrom durch die Passung. Die zusätzliche axiale Druckfeder 90 sorgt dafür, dass die Dichtblende kontinuierlich an die Leitschaufel-Gegenkontur 34 gepresst wird und dadurch der axiale Spalt sowie die Leckage-Strömung unterbunden werden. Die Druckfeder 90 wird zwischen einen Axialanschlag am Turbinengehäuse 22 und dem Axialanschlag des Zylinderkragens der Dichtblende 80 eingespannt. Die Druckfeder 90 kann zusätzlich auch die axiale Sicherung der Leitschaufel übernehmen, indem das Leitschaufelprofil durch die Druckfeder gegen die gegenüberliegende Wand des Strömungskanals oder einen anderen Axialanschlag am Turbinengehäuse gedrückt wird.

In einer weiteren, nicht dargestellten Ausführungsform kann die Dichtblende auch direkt auf ein Teil des Turbinengehäuses aufgeschoben werden, etwa wenn die Führungsbüchse der Leitschaufellagerung nicht zugänglich angeordnet ist oder ganz fehlt. In diesem Fall würde die Dichtblende von einem zylindrischen Aussendurchmesser eines Gehäuseteils getragen. Die Dichtblende kann alternativ auch radial innerhalb der Führungsbüchse oder einer zylindrischen Ausnehmung des Turbinengehäuses geführt sein.

Die erfindungsgemässe Dichtblende verhindert somit bei Abgasturbinen mit oder ohne Sperrluftversorgung oder bei jeder beliebigen anderen Strömungsmaschine mit rotierbar gelagerten, verstellbaren Leitschaufeln das Austreten von Luft oder Gasen durch die Lager der Leitschaufeln.

### Bezugszeichenliste

- 10: Turbinenrad
- 11: Nabe
- 12: Laufschaufeln
- 13: Welle
- 21: Gaseintrittsgehäuse
- 22: Lagergehäuse
- 23: Zwischenwand
- 31: Leitschaufel
- 32: Leitschaufelschaft
- 33: Lagerstelle
- 34: Gegenkontur
- 41: Verstellhebel
- 42: Verstellring, Verstellelement
- 50: Führungsbüchse
- 60: Sperrluftströmung
- 61: Hohlraum
- 62: Sperrluftkanal
- 63: Leckage
- 70: Heissgasströmung
- 80: Dichtblende
- 90: Druckfeder

## Patentansprüche

1. Leitvorrichtung einer Strömungsmaschine, umfassend mindestens eine Leitschaufel (31) mit einem in einem Gehäuse (22, 23) drehbar gelagerten Leitschaufelschaft (32), **dadurch gekennzeichnet, dass** zwischen dem Gehäuse (22) und dem Leitschaufelschaft (32) eine Dichtblende (80) angeordnet ist.

2. Leitvorrichtung nach Anspruch 1, **dadurch gekennzeichnet, dass**, das Gehäuse zum Lagern des Leitschaufelschafts (32) eine Führungsbüchse (50) umfasst, und dass die Dichtblende (80) zwischen der Führungsbüchse (50) und dem Leitschaufelschaft (32) angeordnet ist.

3. Leitvorrichtung nach einem der Ansprüche 1 oder 2, **dadurch gekennzeichnet, dass** die Dichtblende (80) mittels einer Druckfeder (90) gegen eine Gegenkontur (34) der Leitschaufel gedrückt ist.

4. Abgasturbolader, **gekennzeichnet durch** eine Abgasturbine mit einer Leitvorrichtung gemäss einem der Ansprüche 1 bis 3.

5. Strömungsmaschine, **gekennzeichnet durch** eine Leitvorrichtung gemäss einem der Ansprüche 1 bis 3.
